# EUROPEAN PATENT APPLICATION

(11) **EP 0 936 832 A1**
(43) Date of publication of application: **18.08.1999**
(21) Application number: 98932554.3
(22) Date of filing: 16.07.1998
(51) Int. Cl.: H04Q 7/38

(54) **DATA COMMUNICATION METHOD, MOBILE MACHINE, AND RADIO BASE STATION**

(30) Priority: 19.07.1997 JP 20964197
(71) Applicant: Matsushita Electronics Corporation, Kadoma-shi, Osaka 571-8501 (JP)
(72) Inventor: TATSUMI, Akinori, Yokohama-shi, Kanagawa 234-0056 (JP)
(74) Representative: Grünecker, Kinkeldey, Stockmair & Schwanhäusser Anwaltssozietät
(86) International application number: JP9803203
(87) International publication number: WO9904592

(57) **Abstract**

In a case where a mobile apparatus reserves a channel to a base station, a code to be used in reserving the channel is selected from a plurality of codes. Then, reservation packet data to be used when the mobile apparatus reserves the channel to the base station is modulated using the selected code, and the modulated reservation packet data is transmitted. In a case where the base station reserves the channel upon reception of the reservation packet from the mobile apparatus, the reservation packet, including the number of reservation channels and a reservation type, is received from the mobile apparatus. Then, a channel reservation is executed in accordance with the reservation type included in the received reservation packet, and response data according to the reservation type is radio transmitted to the mobile apparatus where the reservation has been performed.

## Description

### Technical Field

The present invention relates to a data communication method, a mobile apparatus, and a radio base station apparatus for performing data communication in a packet switching by using a CDMA system, and particularly to a data communication method suitable for a multi-code packet transmission system using a plurality of codes.

### Background Art

A packet switching in a CDMA (Code Division Multiple Access) mobile communication system transmit a signal which is divided to fixed-sized packets. Therefore, packet switching is not divide a channel by codes like the multiple access in a line switching, and transmit/receive a packet discretely by the same band and the same code.

In the case where the number of mobile stations where simultaneous communications are performed is small and that of packets is also small, the possibility of collision of the packets is low, so that the packets can be randomly transmitted. This system is called random access multiple access.

On the other hand, if the number of mobile stations is increased, the possibility of the collision becomes high. For this reason, the access to the packet transmission band must be controlled in some way. For example, the following method can be considered.

More specifically, a terminal transmits reservation packets to send reverse transmission packets, and the base station will be scheduling for using a channel when the reservation packets is received . Then, the base station notifies the channels and timing to the terminal by the packet control channel . At this time, there is a case in which the reservation channels are transmitted in a state that the plurality of packets overlaps one another. However, in the CDMA system, if there is a time difference of 1 chip or more, the reservation packets can be demodulated separately so that the collision of packets does not easily occur.

There is a limitation in the number of packets with which a single code can deal. In order to deal with an increase in the number of mobile apparatuses in the future satisfactorily, there must be improved the use of multi-code at the time of receiving and transmitting.

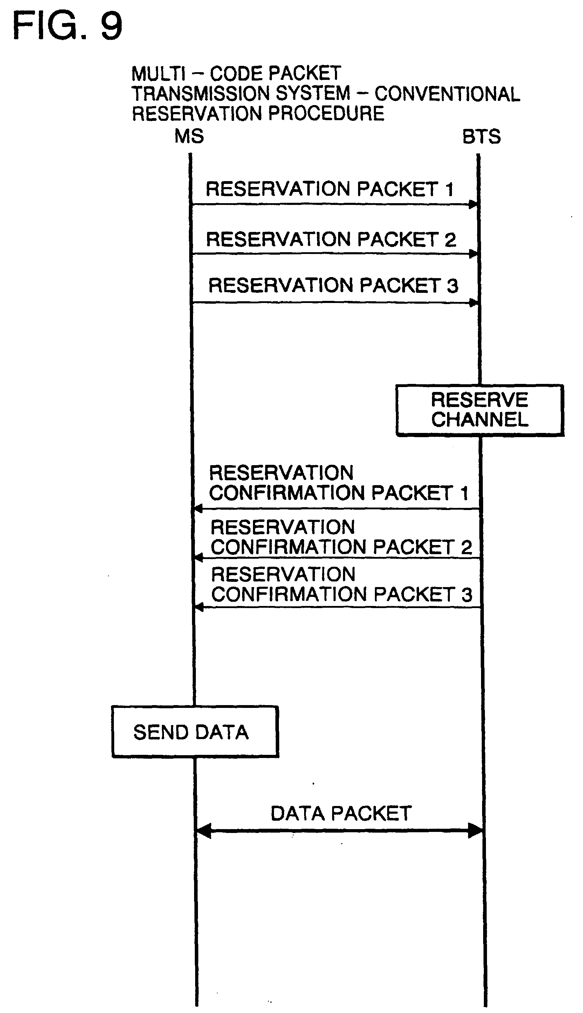

FIG. 9 shows a conventional reservation procedure in a multi-code packet transmission system. In the figure, MS denotes a mobile apparatus, and BST denotes a base station. The base station receives a plurality of reservation packets 1 to 3 randomly transmitted from the mobile apparatus. The base station transmits reservation confirmation packets 1 to 3, to which each code is allocated, to each mobile apparatus. Then, each mobile apparatus starts to transmit a data packet using a permitted code.

Thus, the plurality of codes is used in the transmission band, so that the transmission capacity can be increased. Also, it is possible to deal with an increase in the number of packets with an increase in the number of mobile apparatuses. Moreover, even in the case where the single mobile apparatus transmits a large capacity of data instantaneously, the large capacity of data can be transmitted for a short period of time by reserving the plurality of codes.

However, even in the case where the packet communication is performed using the plurality of codes, the collision of the increased reservation packets cannot be avoided if the code, which is used in transmitting the reservation packets to the base station, is the same.

### Disclosure of Invention

The present invention has been made in consideration of the above-mentioned problem. An object of the present invention is to provide a multi-code packet transmission method for effectively restraining the collision of the reservation packets, which is caused by the simultaneous access from the mobile apparatuses, by randomizing codes of the reservation packets in multi-code packet communications or by reducing the number of reservation packets themselves, and to provide an apparatus using such a method.

According to a first aspect of the present invention, there is provided a channel reservation method in which a mobile apparatus reserves channels to a base station to perform communications of a packet switching type, the channel reservation method comprising the steps of:
selecting a code to be used in reserving the channels from a plurality of codes;
modulating reservation packet data to be used when the mobile apparatus reserves the channels to the base station using the selected code; and
radio transmitting the modulated reservation packet data.

Since the code to be used in reserving the channel is selected from the plurality of codes, the reservation packets using the same code can be prevented from concentrating in the base station apparatus.

A second aspect of the present invention, there is provided a channel reservation method in which a mobile apparatus reserves channels to a base station to perform communications of a packet switching type, the channel reservation method comprising the steps of:
obtaining a code allocated to an identifier of the mobile apparatus;
modulating reservation packet data to be used when the mobile apparatus reserves the channels to the base station using the obtained code; and
radio transmitting said modulated reservation packet data.

Since the code allocated to the identifier of the mobile apparatus is used in reserving the channel, the reservation packets using the same code can be prevented from concentrating in the base station apparatus.

According to a third aspect of the present invention, the number of desired channels requesting the reservation from the base station and a reservation type are included in reservation packet data.

The reservation type is inserted to the reservation packets, so that flexibility of the channel reservation in the base station can be improved.

### Brief Description of Drawings

FIG. 1 is a block diagram showing the functions of the CDMA mobile communication system according to the first embodiment of the present invention;
FIG. 2 is a view showing a sequence of a reservation procedure in a multi-code packet transmission system according to the first embodiment of the present invention;
FIG. 3 is a conceptual view of the multi-code packet transmission system;
FIG. 4 is a view showing various kinds of frame formats in the multi-code packet transmission system according to the first embodiment of the present invention;
FIG. 5 is a block diagram showing the functions of the CDMA mobile communication system according to the second embodiment of the present invention;
FIG. 6 is a block diagram showing the functions of a CDMA mobile communication system according to the third embodiment of the present invention;
FIG. 7 is a view showing various kinds of frame formats in the multi-code packet transmission system according to the third embodiment of the present invention;
FIG. 8 is a view showing a frame reservation condition of a certain code; and
FIG. 9 is a view showing a sequence of a reservation procedure in a conventional multi-code packet transmission system.

### Best Mode for Carrying Out the Invention

Embodiments of the present invention will now be specifically explained with reference to the drawings.

### (First embodiment)

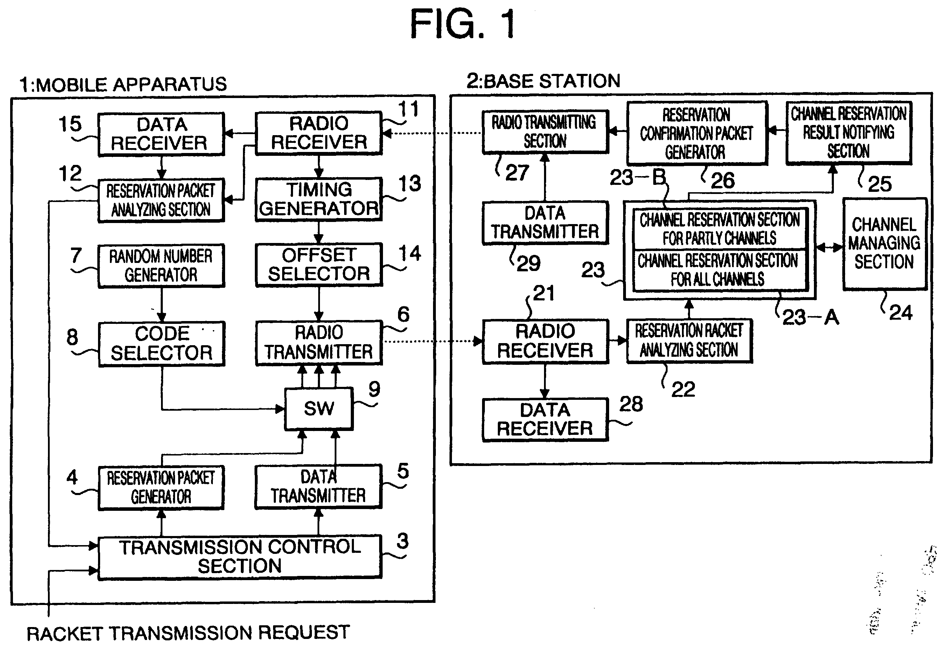

FIG. 1 is a block diagram showing the functions of the CDMA mobile communication system according to the first embodiment of the present invention.

The CDMA mobile communication system of the first embodiment comprises a mobile 1 and a base station 2 each of which are executing data transmission using a CDMA system.

The mobile apparatus 1 comprises a packet transmission control section 3 which controls a multi-code packet transmission using a plurality of codes, a reservation packet generator 4 to generate reservation packets, a data transmitter 5 to transmit a data after reserving a band, and a radio transmitter 6 which modulates packet data by a code sequence corresponding to a using code for transmit to the base station 2. The mobile apparatus 1 further comprises a random number generator 7, a code selector 8 which selects a using code based on a random number generated by the random number generator 7, and a switch 9 which switches the code, which is used when the radio transmitter 6 transmits the reservation packets, to a selective code of the code selector 8. The mobile apparatus 1 further comprises radio receiver 11 which receives data transmitted from the base station 2, reservation confirmation packet analyzing section 12 which analyzes a received reservation confirmation packet, and transmits information of a reserved band, etc to the packet transmission control section 3, timing generator 13 which generates frame timing from broadcast information, offset selector 14 to select a using block in the frame.

The base station 2 comprises radio receiver 21 receives data transmitted from the mobile apparatus 1, reservation packet analyzing section 22 which analyzes a received reservation packet, channel reservation section 23 which reserves channels in accordance with the setting of the reservation packets, and a channel managing section 24. The base station 2 further comprises channel reservation result notifying section 25 which notifies a reservation channel sent from the channel reservation section 23 to the mobile apparatus 1. reservation confirmation packet generator 26 which converts a band reservation result to a packet, radio transmitting section 27 which modulates transmission data, and radiates CDMA modulated data. The base station 2 further comprises data receiver 28 which process the received data received at radio receiver 21, data transmitter 29 to transmits data from the base station 2.

Next, the following will explain an operation of a channel reservation to be executed prior to an actual packet transmission of transmission data in the above-structured CDMA mobile communication system.

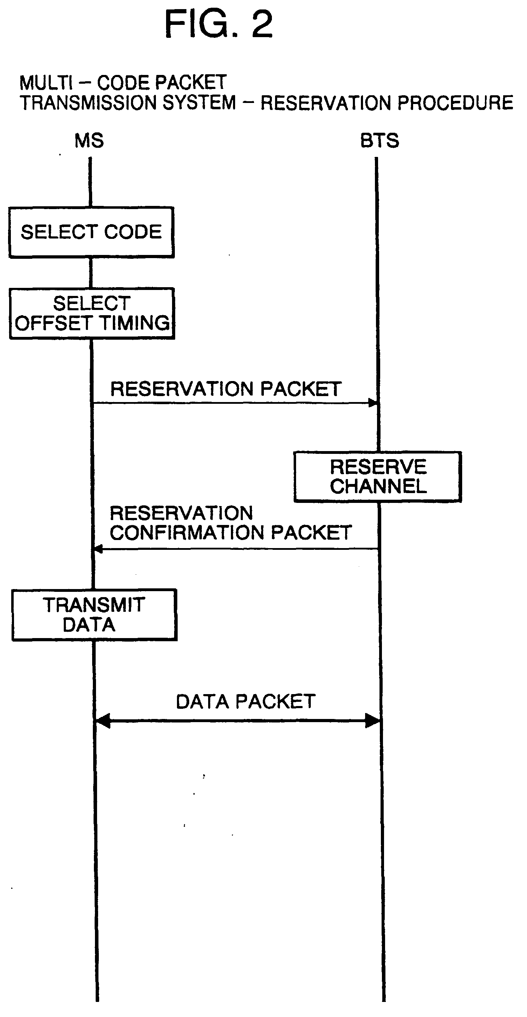

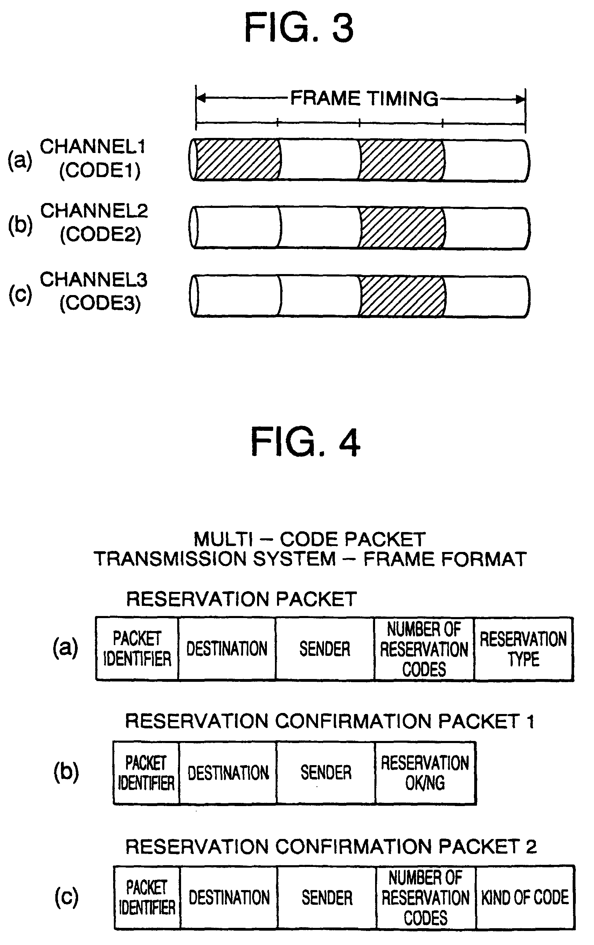

FIG. 2 is a view showing the sequence of the reservation procedure in the multi-code packet transmission system, and FIG. 3 is the conceptual view of the bands reserved in the multi-code packet transmission system. In the general packet transmission system, a single band (code) is observed to transmit or receive the transmission data which is spread by a single code sequence. A plurality of terminals or base stations accesses to the single band randomly, and receives and transmits packets in a time sharing manner in a block unit.

On the other hand, in the multi-code packet transmission system in this embodiment, the spectrum spreading can be performed using a plurality of code sequences each of different so that a plurality of bands (multi-code) can be reserved simultaneously. FIGS. 3(a) to 3(c) show examples in which three bands are reserved using three code sequences, respectively. The bands reserved by the code sequences are called codes 1 to 3, respectively.

In the mobile apparatus 1 shown in FIG. 1, if a packet transmission request is generated, the packet transmission control section 3 instructs the reservation packet generator 4 to generate reservation packets. Upon reception of the instruction from the packet transmission control section 3, the reservation pocket generator 4 generates the reservation packets for reserving bands to the base station 2.

FIG. 4(a) shows a frame format of the reservation packet. In the reservation packet, a packet identifier denoting a kind of the corresponding packet, a destination (base station) where the reservation packet is transmitted, a sending source (this mobile apparatus) showing a sender of the reservation packet are set. Also, the number of reservation codes for setting a number of desired channels to be reserved, and a reservation type are set therein.

In the mobile apparatus 1, the maximum number of reservation codes (the number of codes = 3) are set as the number of reservation codes in a case of transmitting a large amount of data instantaneously. The minimum number of reservation codes (the number of codes = 1) is set in a case of transmitting a small amount of data.

The reservation type denotes a reservation form, which the mobile apparatus 1 desires. More specifically, the following reservation types (a) and (b) can be explained:
(a) The reservation is performed only when all channels shown by the number of reservation codes can be reserved
(b) When all channels shown by the number of reservation codes cannot be reserved, but some of them can be reserved, only some channels can be reserved.

In a case where all channels, which are simultaneously desired, must be reserved, the reservation type (a) is set. In a case where the small amount of data must be immediately sent, the reservation type (b) is set.

The reservation packet having the above-explained frame format is input to the signal processing system of the radio transmitter 6 corresponding to a predetermined code. The switch 9 switches the signal processing system of the radio transmitter 6 where the reservation packet is input. More specifically, any one of codes 1 to 3 is selected by the code selector 8 based on the random number outputted from the random number generator 7 so as to control the switching of the switch 9. In other words, the code for transmitting the reservation packet is selected randomly from the codes 1 to 3.

In the radio transmitter 6, the reservation packet is inserted to a predetermined block of the frame of the code selected randomly. As shown in FIG. 3, one frame is divided into a plurality of blocks so as to be managed. The reservation packet is inserted to the block selected randomly by an offset signal sent from the offset selector 14.

Here, a timing signal, which is synchronized with a head bit of a super frame, is supplied to the timing generator 13 from the radio receiver 11. The timing generator 13 detects synchronization with the current frame on a basis of the timing signal, and inputs the detection result to the offset selector 14. The offset selector 14 operates to determine an offset from the head of one frame and insert the reservation packet to the corresponding block.

Thus, the code for transmitting the reservation packet is selected randomly, and the block of one frame is also selected randomly. By these two kinds of randomization, each subjected to the code and the block, the reservation packets output from the plurality of the mobile apparatuses can be completely prevented from concentrating on the specific code and block.

On the other hand, in the radio receiver 21 of the base station 2, if the packet identifier of the packet received from the mobile apparatus 1 is a reservation packet, the reservation packet is sent to the reservation packet analyzing section 22 to check the content. The reservation packet analyzing section 22 notifies sending source, the number of reservation codes, and the reservation type each set in the reservation packet to channel reservation section 23.

The channel reservation section 23 has a reservation section 23-A for all channels and a reservation section 23-B for partly channels. In the channel reservation section 23, either the channel reservation section 23-A or 23-B is operated in accordance with the reservation type notified from the reservation packet analyzing section 22.

It is now assumed that the reservation type (a) is notified. In this case, the channel reservation section 23-A is operated. The channel reservation section 23-A inquires of the channel managing section 24 whether or not it is possible to reserve the channels regarding all reservation codes notified from the reservation packet analyzing section 22.

The channel managing section 24 monitors the using condition of the codes 1 to 3 and the reservation condition thereof. Upon the reception of the inquiry from the channel reservation section 23-A, the channel managing section 24 gives an answer about the using condition of the corresponding code and the reservation condition thereof. The channel reservation section 23-A determines whether or not the channels regarding all reservation codes can be reserved from the using condition and the reservation condition. As a result of the determination, if the channels regarding all reservation codes can be reserved, the reservations of all channels of all reservation codes are input to the channel managing section 24, while notification of a reservation OK is provided to the channel reservation result notifying section 25. If only some channels of all reservation codes can be reserved or all channels are already reserved at the present time, notification of a reservation NG is provided to the channel reservation result notifying section 25.

It is assumed that the reservation type (b) is notified. In this case, the channel reservation section 23-B is operated. The channel reservation section 23-B inquires of the channel managing section 24 whether or not it is possible to reserve the channels regarding all reservation codes notified from the reservation packet analyzing section 22.

If the channels regarding all reservation codes can be reserved, the reservations of all channels of all reservation codes are input to the channel managing section 24, while notification of a reservation OK is provided to the channel reservation result notifying section 25.

If only some channels of all reservation codes can be reserved, the reservations of reservable channels are input to the channel managing section 24. On the other hand, the number of reservation codes of which only some channels have been reserved and the kinds of codes is notified to the channel reservation result notifying section 25. If it is impossible to reserve all channels of all reservation codes, notification of a reservation NG is provided to the channel reservation result notifying section 25.

The channel reservation result notifying section 25 prepares a channel reservation result notification with respect to the mobile apparatus 1 where the reservation has been performed based on information notified from the channel reservation section 23, and sends it to the reservation confirmation packet generator 26. More specifically, destination information of the mobile apparatus 1 where the reservation has been performed, information of the reservation OK/NG or some reserved channels are input to the reservation confirmation packet generator 26.

The reservation confirmation packet generator 26 generates a reservation confirmation packet 1 based on the channel reservation result notification sent from the channel reservation result notifying section 25, and inputs the reservation confirmation packet 1 to the radio transmitting section 27. FIG. 4(b) shows the frame format of the reservation confirmation packet 1 to the channel reservation result of the channel reservation section 23-A. Information of the reservation OK/NG is inserted to the reservation confirmation packet 1. FIG. 4(c) shows the frame format of a reservation confirmation packet 2 to the channel reservation result of the channel reservation section 23-B. The number of reservation codes of which some channels have been reserved and the kinds of codes are inserted to the reservation confirmation packet 2. Even in the channel reservation result of the channel reservation section 23-B, the reservation confirmation packet is prepared in the frame format shown in FIG. 4 (b) in the case of the reservation NG.

In the mobile apparatus 1, the radio receiver 11 extracts the reservation confirmation packet from the reception packet based on the packet identifier, and inputs it to the reservation confirmation packet analyzing section 12. The reservation confirmation packet analyzing section 12 extracts information of the reservation OK/NG from the reservation confirmation packet 1 shown in FIG. 4(b) or 4(c), and sends it to the packet transmission control section 3.

When the reservation OK or the number of reservation codes is notified by the reservation confirmation packets 1 and 2 to the reservation request, the packet transmission control section 3 designates the reserved code as a code to be used in the packet communication. Then, the packet transmission control section 3 starts the data transmitter 5 to transmit the data packet.

Thus, according to the above embodiment, the channel where the reservation packet is transmitted is randomized based on the random number and the offset (block) where the reservation packet is inserted is also randomized. As a result, even if the large number of mobile apparatuses 1 transmits the reservation packets at the same period of time, the reservation packets can be transmitted with the random code and at the random timing. This can restrain the collision of the reservation packets effectively.

Also, according to the aforementioned embodiment, the area of the number of reservation codes is reserved in the frame format of the reservation packet so that the plurality of codes can be reserved by one reservation packet. As a result, even when the plurality of codes are reserved, it is not required that the reservation packet be transmitted for each code. This can result in a reduction in the number of reservation packets.

Further, according to the above-mentioned embodiment, the area of the reservation type is reserved in the frame format of the reservation packet so that the reservation type can be notified to the base station 2 together with the reservation. As a result, even if the designated all channels cannot be reserved, only the reservable channels can be used. This can result in the reduction in the number of retrials of the channel reservation.

### (Second embodiment)

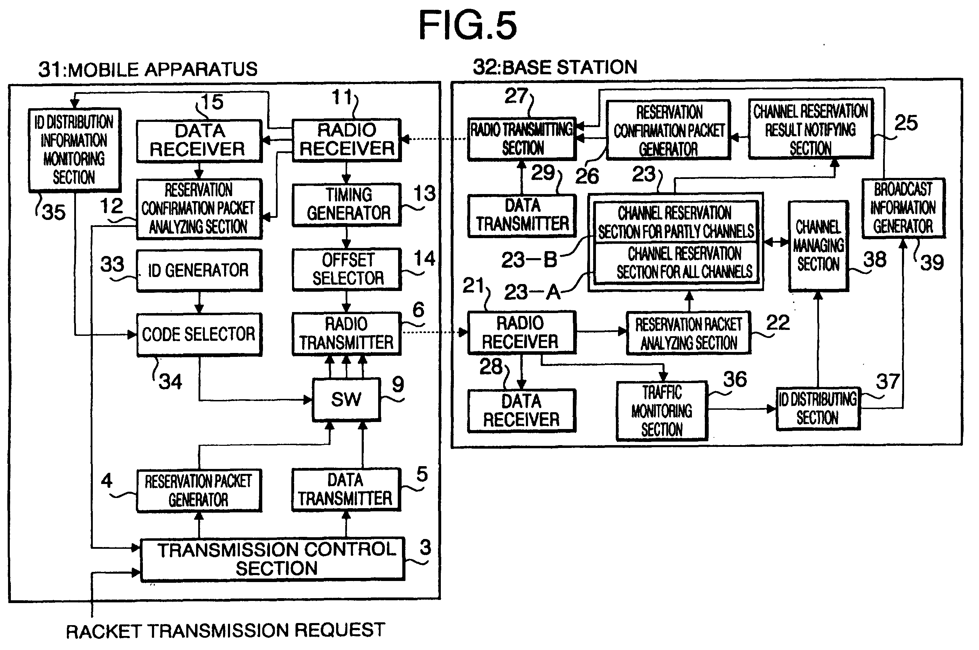

FIG. 5 is a block diagram showing the functions of the CDMA mobile communication system according to the second embodiment of the present invention. The same reference numerals are added to the same functional portions as the first embodiment of FIG. 1.

The CDMA mobile communication system of the second embodiment comprises a mobile apparatus 31 and a base station 32 each performing data transmission by using the CDMA system.

The mobile apparatus 31 comprises an ID generator 33 for generating a mobile apparatus ID, which is an identification number allocated to each mobile apparatus uniquely. The ID generator 33 stores a self-mobile apparatus ID in a memory medium such as a ROM. A code selector 34 outputs code information, corresponding to the mobile apparatus ID input from the ID generator 33, to the switch 9. In the code selector 34, a code table in which the mobile apparatus ID and the using code are made to correspond to each other, is set. In the code table of the code selector 34, one code is allocated to one or a plurality of IDs including the self-ID. The allocation of the code to one or the plurality of IDs can bring about an effect in which the using code can be distributed between the mobile apparatuses each having a different ID. An ID distribution information monitoring section 35 detects ID distribution information from broadcast information transmitted from the base station 32, and generates code table information of the code selector 34.

The base station 32 comprises a traffic monitoring section 36 for monitoring traffic for each mobile apparatus ID from the packet received by the radio receiver 21. In the traffic monitoring, only the end bit of the mobile apparatus ID is monitored. For example, the traffic of the mobile apparatus having the mobile apparatus ID whose end bit is 0 is monitored. The traffic monitoring is also subjected to the other tails = 1, 2, 3...

An ID distribution section 37 changes an ID distribution to the code in accordance with traffic so as to prevent the concentration of traffic on the specific ID. In this case, in the code table of the code selector 34, one code is allocated to one or the plurality of IDs (end) such that no deviation occurs in the codes used by the plurality of mobile apparatuses 31. However, under the assumption of the concentration of the mobile apparatuses, having the IDs (end) to which the same code is allocated, on the area of the base station 32, there is possibility that an disadvantage will occurs if the code table of the code selector 34 is fixed. In this embodiment, the ID distribution section 37 changes the ID distribution to the code in accordance with traffic. This realizes a suitable code distribution in accordance with the present condition.

A broadcast information generator 38 transmits broadcast information including ID distribution information to the code redistributed by the ID distribution section 37 in various kinds of information which the base station transmits.

Next, the following will explain an operation of the channel reservation, which is performed prior to the packet transmission of the actual transmission data, in the above-structured CDMA mobile communication system. It should be noted that the explanation of the same operation as the first embodiment is omitted.

In the mobile apparatus 31, at the time of transmitting the reservation packet, the code selector 34 selects the code corresponding to the mobile apparatus ID of the mobile apparatus 31, which the ID generator 33 outputs, based on the code table. Then, the selected code is provided to the switch 9. As a result, in the radio transmitter 6, the reservation packet generated by the reservation packet generator 4 is transmitted using the code corresponding to the corresponding mobile apparatus ID. Similarly, in each mobile apparatus accessing to the same base station 32, the reservation packet is transmitted using the code corresponding to the each mobile apparatus ID.

In the base station 32, the allocation of the using code to each mobile apparatus ID is performed by the ID distribution section 37. For example, it is assumed that code 1 is allocated to the ID end = 0, 1 and that code 2 is allocated to the ID end = 2. Then, the traffic of the ID end = 0 increases, and that of the ID end = 0, 1 relatively decreases. In this case, if the mobile apparatus having ID end = 0, 1 transmits the reservation packet using the code 1, the possibility that the collision of the reservation packets will be generated becomes high. In order to solve this problem, regarding the ID end = 1 to which code 1 has been allocated, code 1 is changed to code 2. A broadcast information generator 39 sends the ID distribution result as broadcast information to the radio transmitting section 27 so as to be transmitted to each mobile apparatus in the area.

The mobile apparatus 31 receives broadcast information, which is periodically broadcasted from the base station 32, and the ID distribution information monitoring section 35 extracts ID distribution information from broadcast information. If the same number as the ID end of the self-station is changed in ID distribution information, the code table of the code selector 34 is updated so that the changed code is reflected in the code table.

Thus, according to the second embodiment, the codes to be used in transmitting the reservation packets are grouped based on the respective mobile apparatus IDs in the mobile apparatus 31. This can reduce the collision of the reservation packets.

Moreover, according to the second embodiment, in the base station 32, the ID distribution to the code is changed in accordance with the amount of traffic so as to be transmitted to the mobile apparatus 31. This can prevent the concentration of traffic on the specific ID so as to reduce the collision of the reservation packets.

### (Third embodiment)

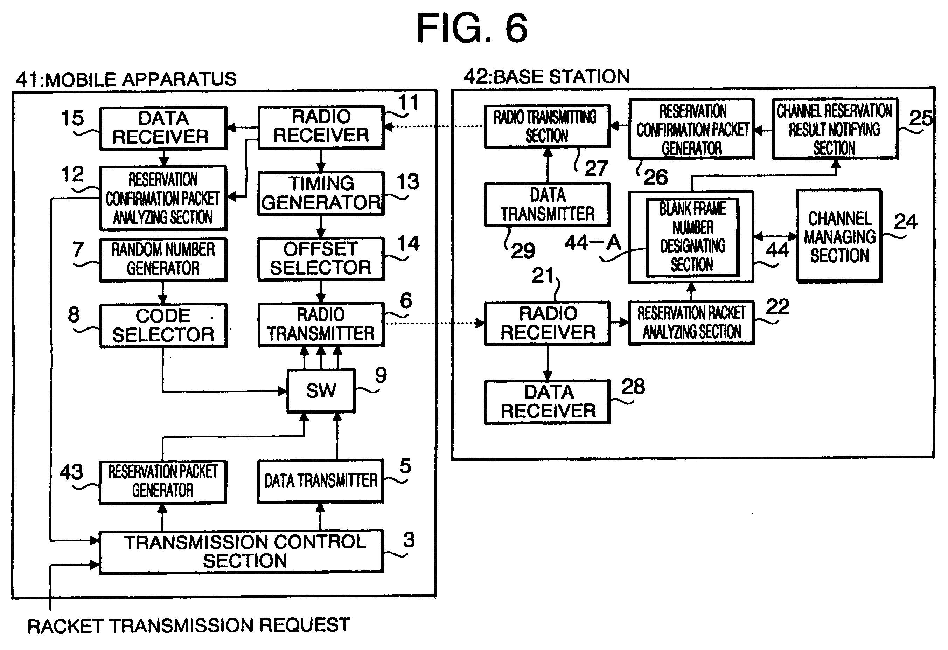

FIG. 6 is a block diagram showing the functions of the CDMA mobile communication system according to the third embodiment of the present invention. The same reference numerals are added to the same functional portions as the first embodiment of FIG. 1.

The CDMA mobile communication system of the third embodiment comprises a mobile apparatus 41 and a base station 42 for performing data transmission in the CDMA system .

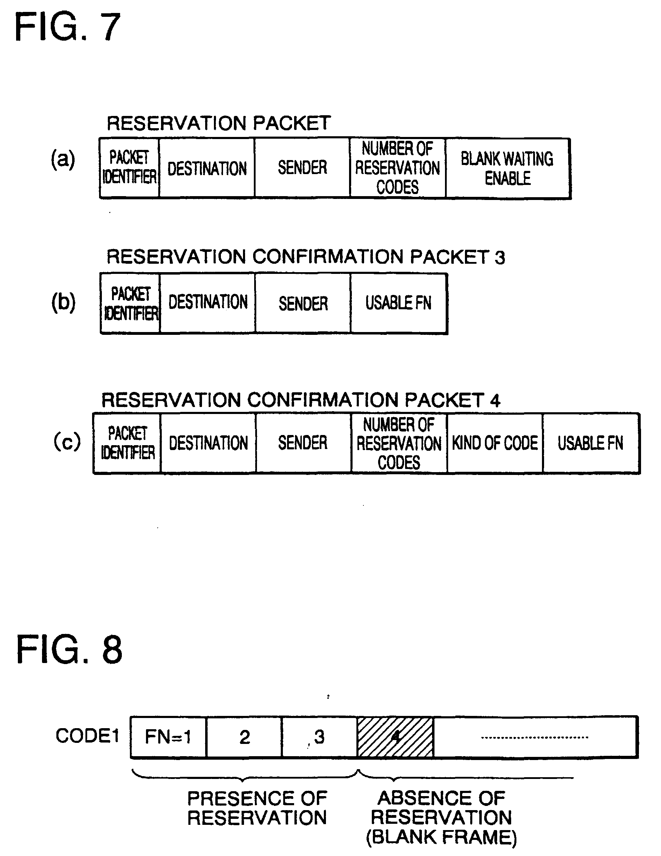

The mobile apparatus 41 comprises a reservation packet generator 43 for generating a reservation packet shown in FIG. 7(a). The base station 42 comprises a channel reservation section 44 having a blank frame number designating section 44-A. The other structure is the same as the first embodiment.

When the generation of the reservation packet is designated from the packet transmission controlling section 3, the reservation packet generator 43 additionally sets information of blank waiting enable to the area of the reservation type in the reservation packet, depending on the set content. FIG. 7(a) shows the frame format of the reservation packet in which information of blank waiting enable is additionally set to the area of the reservation type.

Here, the following case can be considered when the reservation packet is received in the base station 42. More specifically, there is no code to which the mobile apparatus 41 can access immediately, but a blank, which is possible to be reserved after waiting a plurality of frames, is present. In the mobile apparatus 41, information of blank waiting enable is set to the area of the reservation type in the reservation packet in the following case. More specifically, instead of the immediate transmission of the packet after transmitting the reservation packet, it is desired that a reservation confirmation packet be returned when a blank of frame is occurred.

In the base station 42, the reservation packet analyzing section 22 detects information of blank waiting enable from the area of the reservation type in the reservation packet, and the band reservation section 44 cannot reserve the code corresponding to the number of reservation codes. At this time, the blank frame number designating section 44-A is operated. The blank frame number designating section 44-A checks whether the reservable frame is present in some later frames in connection with each code from the reservation condition of each of the current codes obtained from the channel managing section 24. Then, the blank frame number designating section 44-A detects the frame number and the code number in the code where the reservable frame is present. As shown in FIG. 8, if there is a blank in a fourth frame of code 1, information having using code = 1 and usable frame number = 4 is notified to the channel reservation result notifying section 25.

The channel reservation result notifying section 25 requests that the reservation type of the reservation packet reserves all channels of the number of reservation codes. When all channels of the number of reservation codes have been able to be reserved, the channel reservation result notifying section 25 provides the mobile apparatus (destination) where the reservation has been performed and the frame number of the reserved code to the reservation confirmation packet generating section 26. In this case, the mobile apparatus (destination) and the frame number serve as information of channel reservation result notification. As mentioned above, the channel reservation result notifying section 25 requests that the reservation type of the reservation packet reserves all channels of the number of reservation codes. However, when it is impossible to reserve all channels of the number of reservation codes at the same time, the channel reservation result notifying section 25 provides the reservation NG to the reservation confirmation packet generator 26.

Also, the channel reservation result notifying section 25 requests that the reservation type of the reservation packet reserves some channels of the number of reservation codes. When some channels of the number of reservation codes have been able to be reserved, the channel reservation result notifying section 25 provides the mobile apparatus (destination) where the reservation has been performed and the frame number of the reserved code to the reservation confirmation packet generating section 26. In this case, the mobile apparatus (destination) and the frame number serve as information of channel reservation result notification.

When the channels of all codes set in the reservation packet have been able to be reserved, the reservation confirmation packet generator 26 generates the reservation confirmation packet 3 shown in FIG. 7(b), and the generated reservation confirmation packet 3 is transmitted from the radio radiating section 27. When some channels of the number of reservation codes have been able to be reserved, the reservation confirmation packet generator 26 generates the reservation confirmation packet 4 shown in FIG. 7(c), and the generated reservation confirmation packet 4 is transmitted from the radio radiating section 27.

In the mobile apparatus 41, the reservation analyzing section 12 notifies the packet transmission controlling section 3 of the usable frame numbers (including code numbers) set in the reservation confirmation packets 3 and 4 upon reception of the reservation confirmation packets 3 and 4. The packet transmission controlling section 3 obtains the transmitting frame number from a frame counter. If the frame number is permitted as a usable frame number, the packet transmission controlling section 3 designates a designation code, and starts the transmission of the data packet.

Thus, according to the third embodiment, even in a state that the packet transmission cannot be immediately performed, the transmission of the frame number can be performed as follows:

More specifically, when it is clear that the blank is generated after waiting several frames, the usable frame number, which is present in some later frames, is reserved in accordance with the request from the mobile apparatus 41, and the usable frame number is transmitted to the mobile apparatus 41. As a result, the number of reservation packets can be reduced.

As mentioned above, according to the present invention, the codes of the reservation packets can be randomized in the multi-code packet communications or the number of reservation packets themselves can be reduced. This can effectively restrain the collision of the reservation packets, which is caused by the simultaneous access from the mobile apparatuses.

### Industrial Applicability

Thus, the data communication method of the present invention is useful for the multi-code packet transmission, and is suitable for reducing the number of reservation packets and restraining the collision of the reservation packets.

## Claims

1. A channel reservation method in which a mobile apparatus reserves channels to a base station to perform communications of a packet switching type, said channel reservation method comprising the steps of:
selecting a code to be used in reserving the channels from a plurality of codes;
modulating reservation packet data to be used when said mobile apparatus reserves the channels to said base station using said selected code; and
radio transmitting said modulated reservation packet data.

2. The channel reservation method according to claim 1, wherein in said selecting step, a code to be used in reserving the channels is selected randomly from the plurality of codes prepared in advance based on a random number.

3. The channel reservation method according to claim 2, wherein said reservation packet data is inserted to a block of a frame having a plurality of blocks.

4. The channel reservation method according to claim 3, wherein the block where said reservation packet data is inserted is selected randomly.

5. The channel reservation method according to claim 1, wherein the number of request channels, which is requested to be reserved to said base station, is included in said reservation packet data.

6. The channel reservation method according to claim 5, wherein request data, requesting said base station to immediately notify whether or not all of said number of request channels have been able to be reserved, is included in said reservation packet data.

7. The channel reservation method according to claim 5, wherein a request data, requesting said base station to immediately notify the reserved number of channels, is included in said reservation packet data.

8. The channel reservation method according to claim 5, wherein a request data, requesting said base station to notify a frame number capable of reserving in the desired channels, is included in said reservation packet data.

9. The channel reservation method according to claim 5, wherein request data, requesting said base station to notify a reservation approval at the time when all of the number of desired channels have been able to be reserved, is included in said reservation packet data.

10. The channel reservation method according to claim 5, wherein request data, requesting said base station to notify a reservation approval at the time when some of the number of desired channels have been able to be reserved, is included in said reservation packet data.

11. A channel reservation method in which a mobile apparatus reserves channels to a base station to perform communications of a packet switching type, said channel reservation method comprising the steps of:
obtaining a code allocated to an identifier of said mobile apparatus;
modulating reservation packet data to be used when said mobile apparatus reserves the channels to said base station using said obtained code; and
radio transmitting said modulated reservation packet data.

12. The channel reservation method according to claim 11, wherein the code allocated to the identifier of said mobile apparatus is dynamically changed in accordance with traffic of each channel corresponding to the code.

13. The channel reservation method according to claim 11, wherein the number of desired channels, which is requested to be reserved to said base station, is included in said reservation packet data.

14. The channel reservation method according to claim 11, wherein request data, requesting said base station to-immediately notify whether or not all of said number of desired channels have been able to be reserved, is included in said reservation packet data.

15. The channel reservation method according to claim 11, wherein request data, requesting said base station to immediately notify the reserved number of channels, is included in said reservation packet data.

16. The channel reservation method according to claim 11, wherein request data, requesting said base station to notify a frame number capable of reserving the desired channels, is included in said reservation packet data.

17. The channel reservation method according to claim 11, wherein request data, requesting said base station to notify a reservation approval at the time when all of the number of desired channels have been able to be reserved, is included in said reservation packet data.

18. The channel reservation method according to claim 11, wherein request data, requesting said base station to notify a reservation approval at the time when some of the number of desired channels have been able to be reserved, is included in said reservation packet data.

19. A channel reservation method in which a base station, having reservation packets received from a mobile apparatus for starting communications of a packet switching type, reserves channels for said mobile apparatus, said channel reservation method comprising the steps of:
receiving reservation packets, including the number of reservation channels and a reservation type, from said mobile apparatus;
executing a channel reservation in accordance with the reservation type included in the received reservation packets; and
radio transmitting response data according to the reservation type to said mobile apparatus where the reservation has been performed.

20. The channel reservation method according to claim 19, wherein when said reservation type is a type that requires to immediately notify whether or not all of the number of reservation channels can be reserved, checking whether or not all of the number of channels required in said reservation packets can be reserved, reserving all of the number of channels only when all of the number of reservation channels required in said reservation packets can be reserved, and radio transmitting a reservation approval packet as said response data, showing that all of the number of channels required have been reserved, to the mobile .

21. The channel reservation method according to claim 19, wherein when said reservation type is a type that requires to immediately notify the reserved number of reservation channels, reserving at least an immediately reservable channel if there is, and transmitting a reservation confirmation packet, showing a reservation result as said response data, to the mobile apparatus.

22. The channel reservation method according to claim 19, wherein when said reservation type is a type that requires to notify a frame number capable of reserving in desired channels, reserving all of the desired channels by use of a blank in later frames, and transmitting a reservation approval packet including the reserved frame number as said response data to the mobile apparatus.

23. The channel reservation method according to claim 19, wherein when said reservation type is a type that requires to notify a reservation approval at the time when all of the desired channels have been able to be reserved, a reservation approval packet as said response data is transmitted to the mobile apparatus at the time when all channels have been able to be reserved.

24. The channel reservation method according to claim 19, wherein when said reservation type is a type that requires to notify a reservation approval at the time when some of the number of desired channels have been able to be reserved, a reservation approval packet, including a kind of the code of the reserved channel and a frame number as said response data, is transmitted to the mobile apparatus at the time when the part of the channels has been able to be reserved.

25. A channel reservation method in which a base station, having reservation packets received from a mobile apparatus for starting communications of a packet switching type, reserves channels for said mobile apparatus, said channel reservation method comprising the steps of:
monitoring traffic for each code;
changing a distribution of a mobile apparatus identifier to the code in accordance with the traffic; and
radio transmitting information of the changed distribution of the identifier to the mobile apparatus.

26. A mobile apparatus for performing communications of a packet switching type between said mobile apparatus and a radio base station using a multi-code, comprising:
reservation packet generating means for generating reservation packets when a packet transmission request occurs;
random number generating means for generating a random number;
code selecting means for selecting a code randomly from a plurality of codes based on said generated random number;
modulating means for modulating said reservation packets using said selected code; and
means for radio transmitting said modulated reservation packets.

27. A mobile apparatus for performing communications of a packet switching type between said mobile apparatus and a radio base station using a multi-code, comprising:
reservation packet generating means for generating reservation packets when a packet transmission request occurs;
random number generating means for generating a random number;
modulating means for modulating said reservation packets using a code allocated to an identifier which said mobile apparatus has; and
means for radio transmitting said modulated reservation packets.

28. A radio base station apparatus for performing communications of a packet switching type between said radio base station and a plurality of mobile apparatuses, comprising:
channel managing means for managing a condition of each transmission channel corresponding to each code;
packet analyzing means for analyzing a content of a received reservation packet;
channel reservation means for executing a processing for reserving a channel in accordance with the analyzing result of the reservation packet so as to generate a reservation confirmation packet; and
radio transmitting means for radio transmitting the generated reservation confirmation packet to the mobile apparatuses where the reservation has been performed.

29. The radio base station apparatus according to claim 28, wherein when a request for immediately notifying that all of the number of channels have been reserved is included in said reservation packet, said channel reservation means inquires of said channel managing means and reserves the channels when all of the number of designated channels can be immediately reserved.

30. The radio base station apparatus according to claim 28, wherein said channel reservation means comprises channel reservation means for reserving some channels arbitrarily if there are after inquiring of said channel managing means when a request for notifying the reserved channels arbitrarily is included in said reservation packet, and reservation confirmation packet generating means for generating a reservation confirmation packet showing the number of reserved channels or a reservation disable.

31. The radio base station apparatus according to claim 28, wherein said channel reservation means comprises channel reservation means for reserving a frame capable of reserving all channels using a blank, which is present in some later frames, from a channel condition after inquiring of said channel managing means when a request for notifying a frame number capable of reserving all reservation channels is included in said reservation packet, and reservation confirmation packet generating means for generating a reservation confirmation packet showing the frame number of the reserved channels.

32. The radio base station apparatus according to claim 31, wherein said radio base station transmits the reservation confirmation packet, having the frame number of the reserved channels set, to the mobile apparatus where the reservation has been performed at the time when all channels designated by the reservation packet have been able to be reserved.

33. The radio base station apparatus according to claim 31, wherein said channel reservation means comprises means for reserving a reservable channel by use of the blank, which is present in some later frames, from the channel condition after inquiring of said channel managing means when a request for notifying a kind of code of the channel, which can be reserved at the time when some channels can be reserved, and a frame number is included in said reservation packet, and reservation confirmation packet generating means for generating a reservation confirmation packet showing the kind of code of the reserved channel and the frame number.

34. A mobile radio communication system comprising mobile apparatuses of claim 26 or 27 and a radio base station apparatus of claim 28.
